(19) Europäisches Patentamt / European Patent Office / Office européen des brevets

(11) **EP 2 141 932 A1**

(12) **EUROPEAN PATENT APPLICATION**

(43) Date of publication:
**06.01.2010 Bulletin 2010/01**

(51) Int Cl.:
***H04N 13/00*** *(2006.01)*

(21) Application number: **08305366.0**

(22) Date of filing: **30.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **FRANCE TELECOM**
**75015 Paris (FR)**

(72) Inventors:
• **Coupe, Patrice**
**Tokyo 150-0035 (JP)**
• **Braquet, Vladimir**
**Tokyo 180-0001 (JP)**

(54) **3D rendering method and system**

(57) A method for generating 3D data for subsequent rendering in 3D a scene, said method comprising the acts of capturing video flows of the scene to render by a capturing unit comprising at least two cameras, capturing configuration data of the capturing unit, the configuration data comprising positioning data of the cameras and a measurement of the distance between the capturing unit and a main object of the scene, and generating the 3D data using the captured video flows and the configuration data.

Figure 1

## Description

### Field of the Invention

The present invention relates in general to image capturing and processing and more specifically capturing and rendering systems and methods.

### Background of the Invention

3D (three-dimensional) imaging comprises any technique capable of recording three-dimensional visual information or creating the illusion or effect of depth in an image. For an observer, this 3D effect is based on the difference between what is seen by the left eye and what is seen by the right eye and is called disparity (or parallax). Disparity is a function of the distance of the object to the observer and is what the observer's brain uses to estimate depth.

3D display technology is called stereoscopic 3D. It is based on showing two images (one for the left eye and one for the right eye) captured by a system of two different cameras. Existing efficient solutions are based on 2D (two-dimensional) displays combined with some other devices such as for example polarizing filters associated with polarized glasses, 120Hz-display associated with synchronized shutting glasses etc...

Sending two different images of an object seems simple, but it suffers from a huge drawback: the crystalline lenses of the eyes focus on the display in order to have a clear image at the retina level, but the 3D object seen by the brain is generally not at the display distance. The effect is that the accommodation of the eyes is different from the vergence. The accommodation is the process by which the eye increases optical power to maintain a clear image (focus) on an object as it draws near the eye. The vergence is the distance where the directions of axes of the eyes cross at the main object position. For example, this is the main reason of headache that people feel after watching a 3D video. It is only when the display distance of a given object (the distance between a viewer and the screen/display) corresponds for the brain of a viewer to the physical distance, also called zero parallax plane distance (the distance between the system of cameras and the given object of the captured scene) that the brain pain due to the 3D effect is limited or null. More precisely, the proper rendering in 3D of a main object captured, for example, by two cameras will correspond for the human eyes to the proper spacing, or shifting, of the left and right images at the display/screen level. Therefore, in order to produce good 3D content, the main object of a scene should always appear at the display distance.

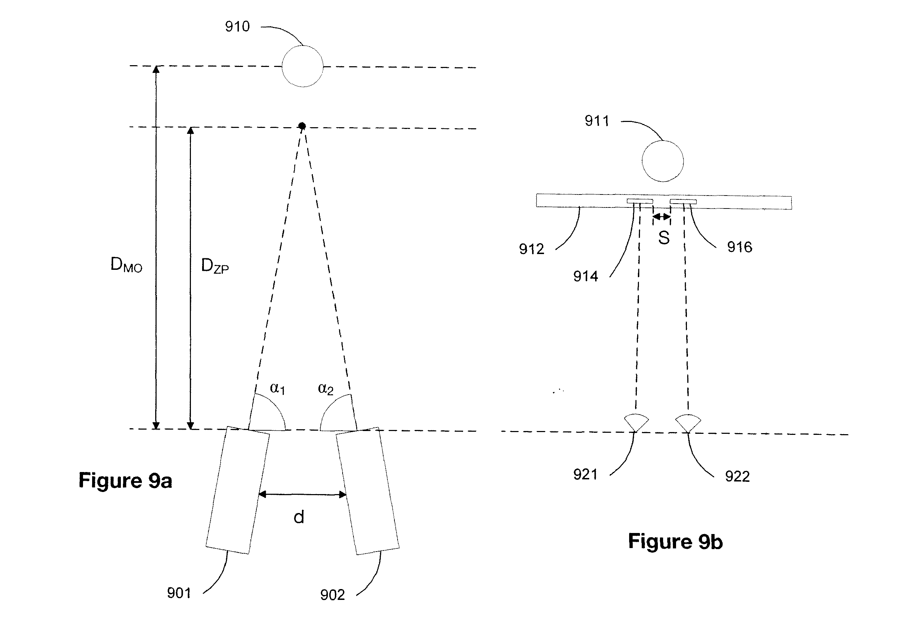

When capturing a scene with a plurality of cameras in order to render it in 3D, the cameras need to focus on a main object of a scene. Therefore, to be rendered properly, the distance from the cameras to the main object should be the same that the distance of focus of the cameras. For example, as described on Figure 9a, two cameras 901 and 902 are separated by a distance d. Cameras 901 and 902 focus on a point located at a distance $D_{ZP}$ which represents thus the distance of zero parallax plane. A main object 910 is located at a distance $D_{MO}$ from the cameras. In order to be further rendered properly, $D_{ZP}$ should be the same as $D_{MO}$. In Figure 9a, the main object is behind the point of focus of the cameras (i.e. $D_{MO} > D_{ZP}$), therefore the main object will be seen in 3D behind the screen. As illustrated on Figure 9b, human eyes 921 and 922 will see the main object 910 captured by cameras 901 and 902 as being a main object 911 rendered behind the screen 912 as of result of the left image 914 and right image 916, causing the brain pain mentioned here above.

Several know solutions have been implemented to capture and render in 3D a video. The most common solution involves using two synchronized cameras for capturing a scene or an object. The result is a set of two videos flows or two videos in a single flow. In order to obtain the zero parallax plane distance, three methods may be used:

- a first solution implies manually calibrating the cameras so that the distance to a captured object corresponds to the zero parallax plane distance. Using Figure 9a, it means that $\alpha1$ and $\alpha2$ are set so that $D_{MO} = D_{ZP}$. This method is not accurate, not efficient and extremely hard, not to say impossible, to manage in real-time if the main object to capture moves rapidly. In this solution, there is a physical calibration of the capturing system by an operator,

- a second solution consists in using pre-calibrated cameras. The cameras are calibrated in order to have a fixed zero parallax plane at a given distance (i.e. a fixed zero parallax plane distance or using Figure 9a, $D_{ZP}$ = constant). The main object needs to be fixed in order for the cameras to be pre-calibrated and to focus on it. If the main object moves towards or away from the cameras, modifying the zero parallax plane distance, then it will not be rendered properly in 3D, i.e. it will not always appear at the display distance on the screen for the viewer. This solution may be efficient in the case of 3D video telephony for example where the main object to capture remains at a fixed distance, but not in the case of a moving object,

- a third solution consists in processing the 3D content after capture using a post-processing software calibration method. In this solution, a software will try to compute the different zero parallax plane distances to a main object from the captured images (for instance through correlation between left and right images) instead of an operator. However, this solution requires an operator to indicate on the images where this main object is. Such a computation is called depth-map computation and is the 3D format pushed by Philips in the Mpeg consortium. This solution requires a huge amount of computation and might not be suitable for live broadcasting due to real time constraints as it requires an operator to point regularly to the main object of focus, the existing methods of auto-detection not being satisfactory enough.

Today there is a need for a 3D video solution that can be easily implemented on the existing communication infrastructures, overcoming the drawbacks of the prior art.

## Summary of Invention

It is an object of the present system to overcome disadvantages and/or make improvement over the prior art.

To that extend, the invention proposes a method for rendering in 3D a scene captured by a capturing unit according to claim 1.

The method according to the invention takes advantage of the specificities of the space where a scene to be captured for further rendering in 3D is taking place. The use of the distance between the capturing unit and the main object of the scene will allow simplifying the capture process. For example, when capturing a sport scene or event, it means that the sport specificities, such as the fixed lines of the sport field, or a moving player, may be used to calculate the zero parallax plane distance, and recalibrate the captured flows so as to render the main object on the 3D display.

In comparison with existing solutions, the method according to the invention corresponds to a calibration method that allows adapting the captured images in order to simulate a capturing unit which would have focussed on the main object at any time. In other words, the main object rendered on the display appears at any time at a display distance which corresponds to the zero parallax plane distance.

The invention also relates to a method for generating 3D data for subsequent rendering in 3D a scene captured by a capturing unit according to claim 7.

The invention also relates to a rendering device according to claim 10.

The invention also relates to a 3D data generating device according to claim 11.

The invention also relates to a system according to claim 12.

The invention also relates to a system according to claim 13.

The invention also relates to a computer program according to claim 14.

The invention also relates to a computer program according to claim 15.

## Brief Description of the Drawings

Embodiments of the present invention will now be described solely by way of example and only with reference to the accompanying drawings, where like parts are provided with corresponding reference numerals, and in which:

Figure 1 schematically illustrates the system according to an embodiment of the present invention;

Figure 2 schematically illustrates an example of grid of static calibration points according to an embodiment of the present invention;

Figure 3 schematically illustrates an example of positioning of an infrared receptor according to an embodiment of the present invention;

Figure 4 schematically illustrates an example of application according to an embodiment of the present invention;

Figure 5 schematically illustrates an example of application according to an embodiment of the present invention;

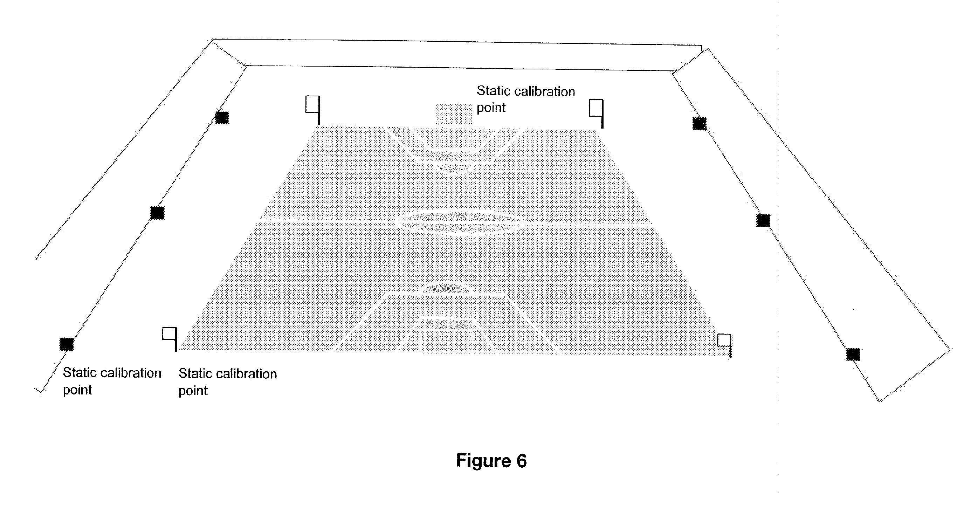

Figure 6 schematically illustrates an example of application according to an embodiment of the present invention;

Figure 7 schematically illustrates the system according to an embodiment of the present invention;

Figure 8 schematically illustrates the method according to an embodiment of the present invention,

Figure 9a is an illustration of a capturing unit and a main object of a scene to be captured; and,

Figure 9b is an illustration of human eyes focusing on a main object rendered on a display.

## Description of Preferred Embodiments

The method according to the invention allows capturing and rendering in 3D an object at a suitable distance on a receiver display, where said suitable distance is derived from the zero parallax plane distance that corresponds to the physical distance to the object at the capturing step. The zero parallax plane distance as illustrated in Figure 9a corresponds to the distance of the plane where the disparity (the distance between the left and right eye projections) is zero at the display. This corresponds to the distance where the accommodation of the eyes is equal to the vergence. From the point of view of the capturing unit, the zero parallax plane distance corresponds to the distance to a main object where the cameras of the capturing unit should focus to capture images of said main object to further render in 3D on a display the main object.

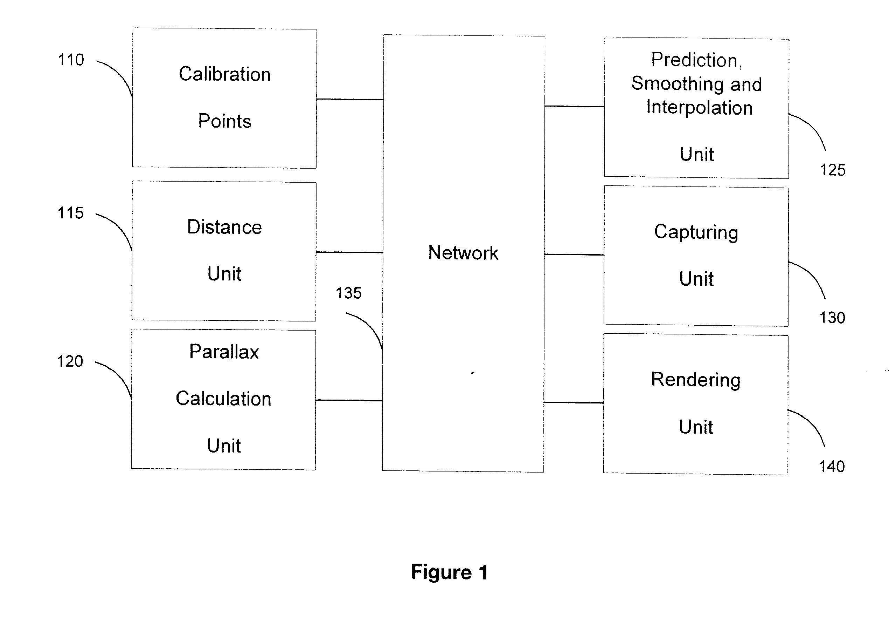

Figure 1 describes an illustration of the system according to one embodiment of the present invention. Said system comprises:

- at least one calibration point 110 for static and/or dynamic calibration;

- a distance unit 115;

- a parallax calculation unit 120;

- a (optional) prediction and interpolation unit 125;

- a capturing unit 130

- a network 135

- a receiver 140.

Calibration points 110, or calibration devices, are used to locate elements of a captured scene in order to be further able to get the distance between said elements and the capturing unit 130.

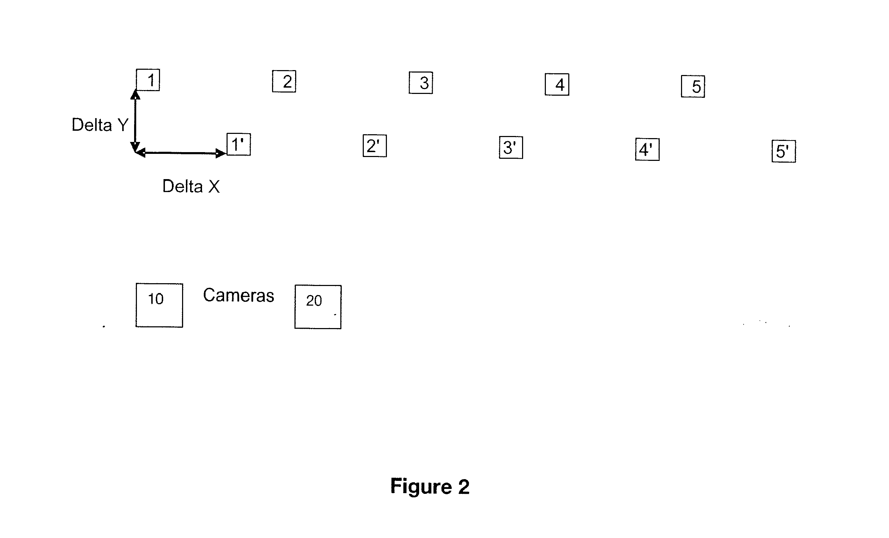

A static calibration point is a static point of the captured scene that allows locating said point in order to derive its distance from the capturing unit. A static calibration point remains immobile or fixed in the captured scene and may have a specific appearance. A static calibration point may be for example an object of the scene such as e.g. a line on a tennis court or may also be an infrared emitter or reflector, an ultrasonic emitter etc... Usually, for a given captured scene, a certain number of static calibration points may be used and organized for instance as a grid of static calibration points. The distance from the capturing unit to a given static calibration point is known a priori as said given static calibration point is fixed. Consequently, distances from the capturing unit to every static calibration point of the system should be measured before capturing a scene in order to be known by the system according to the invention. When several static calibration points are used, a grid may be defined as described hereafter on Figure 2.

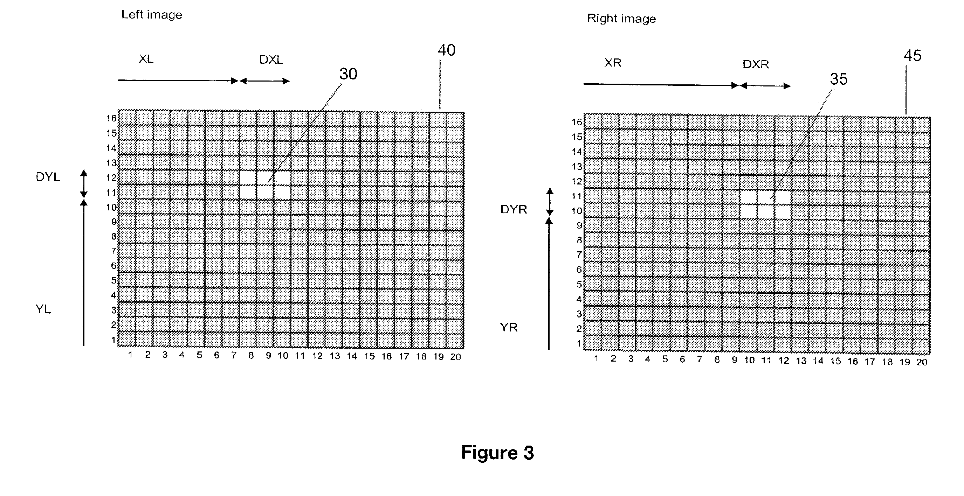

A dynamic calibration point is a point linked to a moving object (for example a sport player, a ball, a car, etc...) allowing locating said point in order to further derive its distance from the capturing unit. For instance, a dynamic calibration point may be an infrared reflector on a player shirt or on a car or a moving point that may be localized by a localisation system such as e.g. a GPS, white stripes, laser telemeters, sensor grids, photovoltaic cells etc... A dynamic calibration point allows locating the same point, on the left and right images captured by two cameras, that corresponds to the zero parallax plane distance between the capturing unit and the object that carries said dynamic calibration point. A dynamic calibration point may also correspond to a set of pixels on said images rather than just a single point. In the case where infrared reflectors are used as calibration points, infrared cameras may be used to determine the position of the reflectors on the left and right images (e.g. a white pixel or set of white pixels appears for an infrared receptor whereas the other pixels are black for the rest of the scene). The analysis of these two images allows deriving the zero parallax plane distance and will be explained hereafter in Figure 3.

When several calibration points are used, a selection may be performed in order to choose the one corresponding the most to the main object of the captured scene.

The information obtained from at least one calibration point may be for example:

- the distance between the capturing unit and said calibration point(s);

- angles that allow deriving, from the distance derived from an image captured at instant t, the distance at an instant t+1.

More generally, a calibration point or device may be a passive calibration point (e.g. infrared reflectors...) or active calibration devices (sensors, GPS chips ...)

The distance unit 115 allows deriving the distance to a calibration device.

The distance unit 115 comprises a distance measurement unit which allows measuring the position of the calibration points. For a static calibration point, the distance may be given as a parameter to the distance unit 115 before capturing a scene or measured by the distance measurement unit of the distance unit 115 before capturing a scene. For a dynamic calibration point, as the distance shall vary, the distance measurement unit of the distance unit 115 ought to measure said distance at any time. This implies using dynamic calibration points such as e.g. infrared receptors or GPS chips that will allow the distance measurement unit of the distance unit 115 to measure said distance. For example in the case of infrared detectors, it may be done by computation using a processing resource such as e.g. a software or a chip running a triangulation algorithm. Triangulation is the process of finding coordinates and distance to a point by calculating the length of one side of a triangle, given measurements of angles and sides of the triangle formed by that point and two other known reference points, using the law of sines. In this case, the capturing unit 130 is coupled with infrared cameras which allow the distance measurement unit of the distance unit 115 to measure or compute said distance as described hereafter in Figure 3. In the case of GPS, the coordinates of the capturing unit 130 and the coordinates of the main object (located by GPS) allow the distance measurement unit of the distance unit 115 to compute said distance as being the distance between the two coordinates.

This computation is much simpler than 3D content post processing described in the prior art and requires a much smaller amount of processing resources. Indeed, computing the distance to an object captured in an image requires the recognition of this object in subsequent images. This involves edge detection, occlusion detection and further smoothing. Edge detection consists in identifying points in a digital image at which the image brightness changes sharply or, more formally, has discontinuities. Occlusion detection consists in identifying the parts of an image that are masked or occluded. Smoothing of an image consists in creating an approximating function that attempts to capture important patterns of said image.

If there are several objects of interest in a scene to be captured, the distance unit may be easily switched between them (as easy as switching between usual 2D cameras). The distance to a calibration point may further be optionally sent with the video flows captured by the cameras of the capturing unit to a receiver where a rendering unit will further render in 3D said video flows. The distance to a calibration point may further be used to calibrate the images on the receiver; i.e. to render in 3D on the receiver the captured content at a display distance.

A parallax calculation unit 120 may be used in the system according to the invention in order to indicate the most appropriate point to use for zero parallax plane distance measurement. Each camera of the capturing unit is located in respect to calibration point(s). For each camera, there is a list of parallax adjustment points, defined e.g. by static reflectors or derived reflectors that may be used. Those points have known relative coordinates allowing positioning them in regard to the cameras of the capturing unit. Each camera is operated by an operator who follows the scene with a particular angle. When shooting the view, an operator may indicate the most appropriate point for parallax calculation.

The prediction, smoothing and interpolation unit 125 is optional for post processing of the measured distance. It is based on the facts that:

-    After several successive acquisitions of object distance, the object distance capturing system may miss measurements for a while. Therefore a prediction algorithm might be used. It may be one of the following usual methods accessible to the man skilled in the art:

-    linear prediction (or higher level polynomial prediction),

-    Bayesian estimators,

-    support vector machine estimators or reproducing kernel Hilbert space estimators.

-    Between several successive acquisitions of object distance, the object distance capturing system may be required. Therefore an interpolation algorithm might be used. It may be one of the following usual methods accessible to the man skilled in the art:

-    linear interpolation, cubic spline or higher level polynomial interpolation,

-    Bayesian methods,

-    support vector machine interpolation or reproducing kernel Hilbert space interpolation.

-    The acquisition of successive object distances may be noisy or not very precise. A smoothing algorithm may be used. It may be one of the following usual methods accessible to the man skilled in the art:

-    first order smoothing (or higher order smoothing) based on low pass filter],

-    noise canceller.

The capturing unit 130 comprises at least two cameras for capturing a scene. Cameras produce video flows from the captured content.

It allows live capturing and may allow live processing of a content. Indeed, using the unit 120, a zero parallax plane distance parameter is set successively as one of the values pre-defined in the case of static calibration points, or is set continuously as the derived or estimated or measured distance (using e.g. the unit 125)

Post processing is also possible using the same mechanism, including the possibility to select the best zero calibration point from the set of possible ones to achieve the best quality in contents.

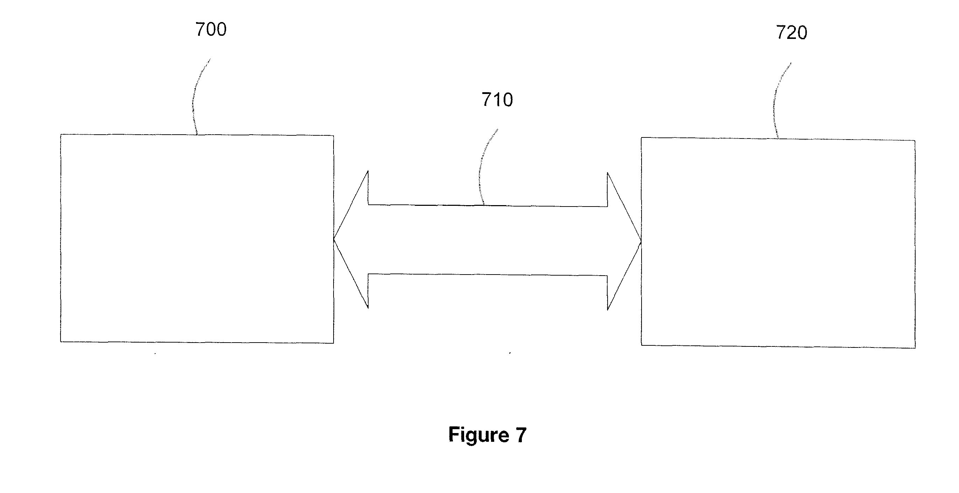

The different elements of the present system may be embodied in one or more devices, such as a emitter device to capture and sent the video flows over a telecommunication network to a receiver device for subsequent rendering of the captured scene in 3D. Possible embodiments will be described hereafter in relation to Figure 7.

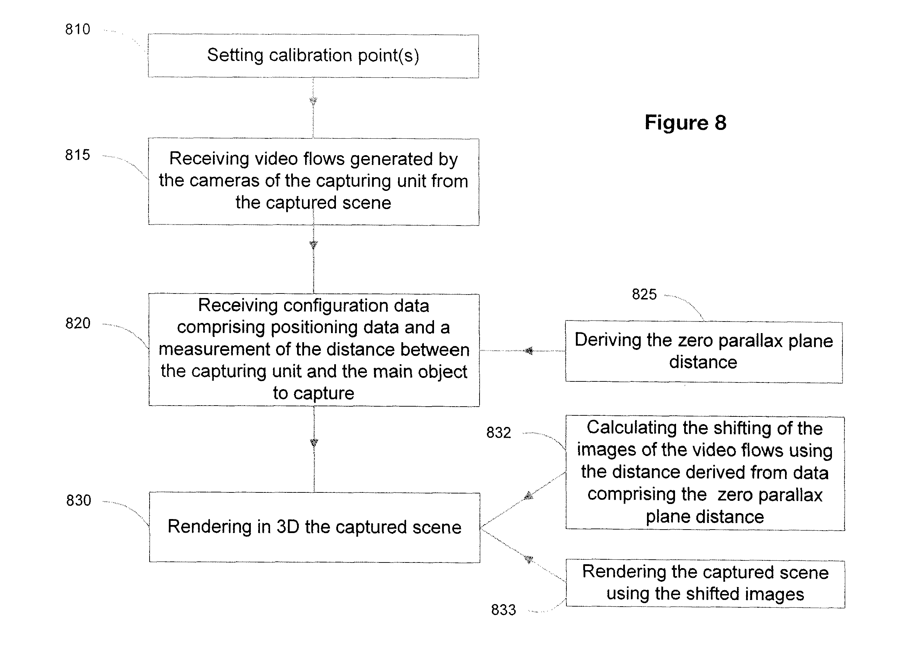

Figure 8 describes an illustrative embodiment of the present method. This embodiment illustrates the different acts of the present method carried out by a receiving and/or rendering device. As explained later, some of these acts may be carried out by an emitting device.

In an initial act 810, at least one calibration point is set on the scene to capture. As explained before, these calibration points may be static or dynamic.

In an additional act 815, video flows are captured by the capturing unit of the present system. The number of video flows will depend on the number of cameras of the capturing unit.

In a further act 820, positioning data for the cameras as well as the measurement of the distance from the capturing unit to the calibration points are acquired. These configuration data for the capturing unit may be static data if the cameras do not move during the capturing of the scene and the calibration points are static points. They may be time dependant data if the calibration points are dynamic points. For instance, these data may be acquired on a frame by frame basis if the data flows comprise frames, or at lesser rate than the capturing rate of the capturing unit. The measurement of the distance between the calibration points and the capturing unit is calculated thanks to the distance unit 115 described here before.

In order to achieve the efficient 3D rendering of the present method, the zero parallax plane distance to the main object of the scene, carrying the calibration points, is calculated in a further act 825, using:

- the distance measured between the calibration points and the capturing unit, and,

- optionally other acquired configuration data such as the positioning data, focal length of the cameras, distance between the cameras...).

For example, the distance may be measured using a triangulation method accessible to the man skilled in the art. Triangulation is the process of finding coordinates and distance to a point by calculating the length of one side of a triangle, given measurements of angles and sides of the triangle formed by that point and two other known reference points, using the law of sines.

In a subsequent act 830, the captured scene is rendered in 3D on a rendering display using the configuration data and the video flows. To do so, act 830 may comprise 2 different acts 832 and 833.

In an act 832, the shifting of the images of the different video flows captured by the different cameras is calculated using the zero parallax plane distance calculated in act 825.

The shifting between images of the different video flows may be for instance calculated using the formula:

$$S = \frac{d.f}{D}$$

where:

- d is the distance between the cameras of the capturing unit 130, as seen in FIG. 9a for instance,

- f is the focal of the cameras of the capturing unit 130,

- D is the distance between the capturing unit 130 and the main object of the scene to capture, as provided by the distance unit 115,

In an alternative embodiment of the present method, the shifting distance calculation described in act 832 may be independent of the act 830 and performed on an emitting device when the rendering act 830 is performed on a receiving device. In this case, the shifting distance is sent as a configuration data to the receiving device which thus perform act 830 and more precisely act 833. In this alternative embodiment, the emitting device may itself comprise a portion to generate the 3D data from the captured scene for subsequent sending of the generated 3D data and rendering in 3D in the rendering act 830.

The receiving device may be coupled or part of a rendering device, comprising a display, for rendering the captured scene in 3D. More generally, if the rendering and receiving devices are physically separated, they may nonetheless be seen more generally as a rendering device, as the receiving and the rendering as both linked to act 830.

In a subsequent act 833, the scene is rendered in 3D on a display of a rendering unit using the shifting distance calculated in act 832 and known display methods accessible to the man skilled in the art.

The method according to the invention allows thus calculating the zero parallax plane distance based on the physical distance from the cameras of a capturing unit to an object of a scene in order to further render said object in 3D on a display.

In comparison to prior art methods, advantages of the method according to the invention comprise the following:

- simple since the only required hardware is a set of small localization enablers (IR reflectors, white strips, GPS chips, laser telemeters, sensor grids, etc...)

- fast since there is no need for huge computation resources

- easy to implement.

Sports are a good illustration of the limitations of the methods of the prior art as characteristics of sports contents make them difficult to be addressed by the three methods mentioned above. Indeed:

- in most of the sports, players move quickly, it is thus impossible to use a camera man to perform zero parallax plane settings;

- calibrated cameras are also useless since players move,

- post processing is evidently impossible in the case of live diffusion.

The method according to the invention allows rendering in 3D a scene captured by a capturing unit comprising at least two cameras. In step allows receiving video flows generated by the cameras of the capturing unit from the captured scene. Then, another step allows receiving configuration data for said capturing unit comprising positioning data for said cameras and a measurement of the distance between the capturing unit and a main object of the scene. Finally, the method according to the invention allows rendering the scene in 3D using said configuration data and said video flows. As the configuration data may comprise data that evolve with time, this further allows real-time or live 3D-rendering.

In the exemplary case of a capturing unit comprising two cameras capturing a scene, two video flows are obtained producing each a left and a right image. In order to render the captured scene in 3D on a display of a receiving device or receiver, the left and right images captured by the capturing unit should be adapted, or shifted, using the information obtained on the zero parallax plane distance. This corresponds to the calibration of the zero parallax plane distance for a display of a receiver in order to render in 3D a scene captured by the cameras of the capturing unit.

For example, for a capturing unit comprising two cameras:

- the main object (carrying the calibration point) to capture, is at a distance D from the cameras of the capturing unit;

- the focal length of the cameras of the capturing unit is f meters;

- the distance between the cameras of the capturing unit is I meters.

Then, left and right images should be shifted at the display of the receiver one from the other from (fI/D) meters. This measure may also be converted from meters to a number of pixels in order to facilitate the shifting of images.

Other (or secondary) objects of the captured scene appear in front or behind the main object, giving a depth impression.

The shifting of images is independent from the characteristics of the display of the receiver. Consequently, this may be done e.g. by the emitter. However, the size of the screen of the display of the receiver will allow scaling how secondary objects are rendered more or less in front or behind the main object. The factor is the proportion between the size of the screen and the size of the images.

Both cases where the information to calculate the shifting and the measure of the shifting itself are sent to the receiver are possible. They may be sent together with the video flows (for example in the information field of a packet using the Moving Picture Experts Group 2 (MPEG2) protocol).

As shown on Figure 7, the system according to the invention may comprise an emitting device 700 and a receiving device 720 linked by a network 710. The emitting device 700 and the receiving device 720 may be the same device. Generally, but not necessarily, the emitting device 700 would comprise the capturing unit whereas the receiving device 720 would comprise a rendering unit comprising a display allowing rendering in 3D the captured scene.

Figure 2 describes an illustration of an embodiment of the system according to the invention. In the case where there are several static calibration points, a grid may be used. On Figure 2, reflector 1 is the reference for the cameras 10 and 20. Distances between reflectors 1 to 5 are known. Point 1' to 5' are not themselves reflectors but are actually derived from the reflectors 1 to 5 in order to be used as calibration points for the adjustment of the zero parallax. Delta X and Delta Y are defined when the capturing of the scene is being set-up. Distances to points 1' to 5' are simply calculated knowing Delta X and Delta Y. Points 1' to 5' may thus be taken into account to calculate the zero parallax plane distance since their distance to the cameras is simply derived from 1 to 5, Delta X, and Delta Y. In particular, this method allows defining a set calibration points derived from reflectors. It may be particularly useful in the case where reflectors cannot be installed in certain places, for instance within the game area of a sport event.

Figure 3 describes an illustration of an embodiment of the system according to the invention. In this illustration, one dynamic calibration point is used. It is materialized by an infrared reflector. Two infrared cameras are used to determine the position of the infrared reflector on each of the left and right image captured by the cameras of the capturing unit. Each infrared camera is coupled to a camera of the capturing unit so that they both capture the same image, the infrared camera allowing locating precisely the calibration point.

The infrared reflector is detected on a captured image by an infrared camera as a white spot, which may be a pixel or a group of pixels. A referential grid allows, as shown on Figure 3, locating said white spot by using coordinates such as XL, YL to locate a corner of a white spot 30 on the left image 40 (respectively XR and YR to locate a corner of a white spot 40 on the right image 45) together with DXL and DYL (respectively DXR and DYR) indicating the width of the white spot. These two sets of data are then used to determine the zero parallax plane distance.

Using Figure 3, an example is given below to determine the zero parallax plane distance using XL, YL, DXL, DYL, XR, YR, DXR, DYR. When the cameras have the same axis and rotation angles, YR=YL. The first step consists thus in adjusting the images in order to have YR=YL. Secondly, d being the distance between the infrared receptors, f being the focal length of the infrared cameras, the zero parallax plane distance is equal to: df / (XR - XL). The focal length of an optical camera is a measure of how strongly it converges (focuses) or diverges (diffuses) light.

The resolution of the infrared cameras may be different from the one of the cameras of the capturing unit. In this case, the infrared cameras are not directly or not totally coupled with the cameras of the capturing unit. This may still work as long as XL, YL, DXL, DYL, XR, YR, DXR, DYR may be obtained.

Furthermore, if a zoom is used, it should be taken into account in the calculation of the zero parallax plane distance [df / (XR - XL)].

**Exemplary applications of the invention**

The examples of application of the method according to the invention described below involve trigonometric computation known from the man skilled in the art.

Sport contents have specific and interesting characteristics. Indeed, in most cases:

• the place where the event takes place has very particular spatial specificities

• the actors of the sport event themselves also have characteristics.

For instance, a football game happens:

• on a field with fixed length and width

• with its main point marked by white lines

• with pole at each corners

• with white goal posts of a standardized dimension

• fields players of each team have the same uniform. Goalkeepers and referees as well

• the ball has specific colour and dimension

• the cameras have pre-defined places.
Each of these remarkable points may be used as calibration points.

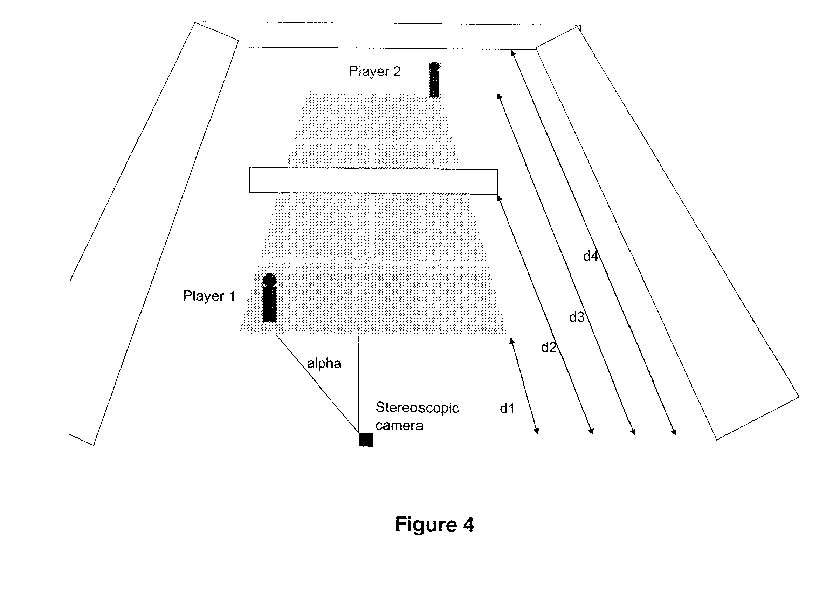

A first example of application of the method according to the invention concerns a tennis court. In this sport, there is a set of pre-defined lines that may be used as calibration points. Moreover, on tennis courts, only predefined camera positions are allowed. Given the camera angles, one may get the distance to any line. The producer may then switch between pre-defined calibrations. In the example illustrated on Figure 4, player 1 is near the first line, so a switch to line 1 calibration leads to a zero parallax plane distance equal to z = d1 / cos (alpha). Using such a calibration point, the player 1 is not far from the screen and the user will feel no pain watching the content. Similar zero parallax plane distances may be easily predefined for other distances relevant in the game like for instance d3 (the net distance) in the case of e.g. volley-ball. Consequently, the method according to the invention may apply to any camera used to capture the scene. Zooms and camera rotations may also be managed by applying optics computation formulas known from the man skilled in the art. It means that the image shift, necessary to set up a suitable zero parallax plane, can be quickly computed from the physical distance. Indeed, a camera rotation is simply compensated by rotating the corresponding image. Moreover, the zoom is only a focal change. As previously explained on Figure 8 in the act 832, the shift is given, once the rotations of cameras have been compensated, by: (distance between cameras) x (focal distance) / (distance to the object).

A second example of application concerns Car Racing. For instance, in the case of Formula 1, the limits of the track, often marked by red and white stripes may be used as static calibration points. Additional reflectors may also be set up as calibration points and used along the track in order to define a reference zero parallax plane distances.

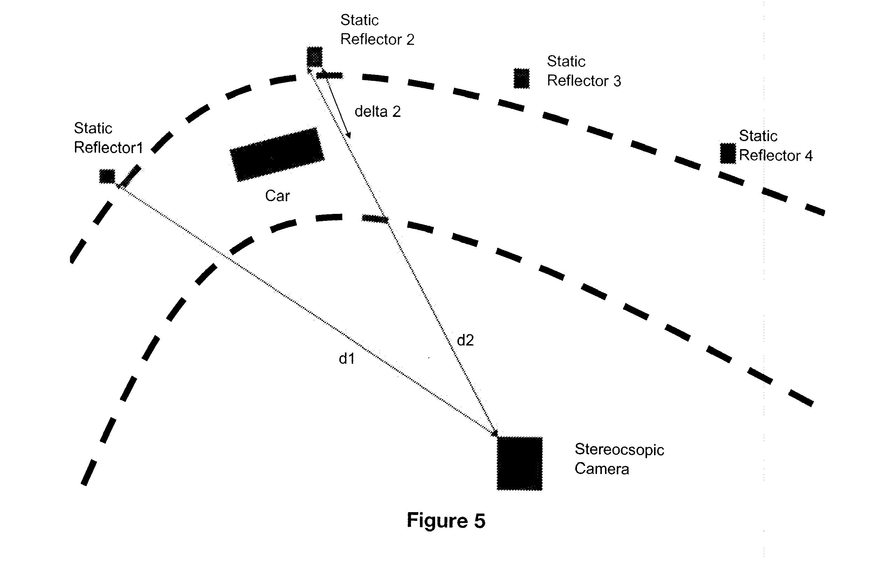

In Figure 5, concerning static calibration points, the reflector 2 is placed at a distance d2 of the camera. This distance may be used as a reference zero parallax plane distance. Beside, a delta2 correction may be applied for the zero parallax plane distance to be adjusted at a distance d2 - delta2. The value of delta2 may be set in order to be on the trajectory of the cars on the race track. Indeed this method is an application of the grid principle described in Figure 2 and the earlier paragraph.

Concerning dynamic calibration points, some of them may be for example placed in relation with the fact that cars emit detectable heat. This information may easily be detected by an infrared detector and coupled with the image to define the zero parallax plane distance calibration for the car. It is to be noted that is is difficult here to use static calibration points since it would lead to very quick switches of zero parallax plane distance calibrations as cars move very quickly. Besides, a GPS chip may be installed on the car in order to easily locate the car and facilitate the zero parallax plane distance calibration. Indeed the GPS gives the precise position of the car with respect to the position of the cameras.

For other examples of application, the method according to the invention may be applied to other sports or events, for instance:

• soccer: using the lines, posts and advertisement banners as static calibration points.

• figure skating: using the ring bounds for static calibration point and the skater as moving calibration point.

• the principle more generally applies to any capture of a scene where calibration points may be defined.

In particular it also applies to cinema studios especially in indoor scenes. The system may also be used for TV program where predefined stages are very common.

**Claims**

1. A method for rendering in 3D a scene captured by a capturing unit comprising at least two cameras, said method comprising the acts of:

   - receiving video flows generated by the cameras of the capturing unit from the captured scene;
   - receiving configuration data for said capturing unit comprising positioning data for said cameras and a measurement of the distance between the capturing unit and a main object of the scene,
   - rendering the scene in 3D using said configuration data and said video flows.

2. A method according to any of the claim 1, wherein the measurement of the distance between the capturing unit and a main object of the scene is performed with a calibration device located at or on the main object, said calibration device.

3. A method according to claim 2, wherein the calibration device is a static point of the captured scene.

4. A method according to claim 2, wherein the calibration device is a dynamic calibration device moving within the captured scene, the measurement of the distance between the capturing unit and a main object of the scene being carried out dynamically.

5. A method according to any of the preceding claims, the captured video flows comprising each a plurality of frames, each frame from one captured video flows being captured simultaneously with a corresponding frame of the other captured video flows, and wherein the rendering act comprises an act of shifting a frame from a first captured video flow with the corresponding frame of a second captured video flow, taking into account the measurement of the distance between the capturing unit and the main object of the scene.

6. A method according to the previous claim, wherein the act of shifting is carried out using a shifting value given by:

$$S = \frac{d.f}{D}$$

where:

   - d is the distance between the cameras of the capturing unit,
   - f is the focal distance of the cameras of the capturing unit 130,
   - D is the measurement of the distance between the capturing unit and the main object of the scene.

7. A method for generating 3D data for subsequent rendering in 3D a scene, said method comprising the acts of:

   - capturing video flows of the scene to render by a capturing unit comprising at least two cameras,
   - capturing configuration data of the capturing unit, the configuration data comprising positioning data of the cameras and a measurement of the distance between the capturing unit and a main object of the scene,
   - generating the 3D data using the captured video flows and the configuration data.

8. A method according to the preceding claim, the captured video flows comprising each a plurality of frames, each frame from one captured video flows being captured simultaneously with a corresponding frame of the other captured video flows, and wherein the generating act comprises an act of shifting a frame from a first captured video flow with the corresponding frame of a second captured video flow, taking into account the measurement of the distance between the capturing unit and the main object of the scene.

9. A method according to the previous claim, wherein the act of shifting is carried out using a shifting value given by:

$$S = \frac{d.f}{D}$$

where:

   - d is the distance between the cameras of the capturing unit,
   - f is the focal distance of the cameras of the capturing unit 130,
   - D is the measurement of the distance between the capturing unit and the main object of the scene.

10. A rendering device for rendering in 3D a scene captured by a capturing unit comprising at least two cameras, said rendering device being arranged to:

> - receive video flows generated by the cameras of the capturing unit from the captured scene;
> - receive configuration data for said capturing unit comprising positioning data for said cameras and a measurement of the distance between the capturing unit and a main object of the scene,
> - render the scene in 3D using said configuration data and said video flows.

11. A 3D data generating device for generating 3D data of a scene for subsequent rendering in 3D of said scene, the generating device comprising a capturing unit, the generating unit being arranged to:

> - capture video flows of the scene to render by the capturing unit comprising at least two cameras,
> - capture configuration data of the capturing unit, the configuration data comprising positioning data of the cameras and a measurement of the distance between the capturing unit and a main object of the scene,
> - generating the 3D data using the captured video flows and the configuration data.

12. A system for rendering in 3D a scene, the system comprising:

> - a capturing unit comprising at least two cameras to capture the scene and generate video flows of the captured scene
> - a main object in the scene,
> - a 3D data generating device to capture configuration data of the capturing unit, the configuration data comprising positioning data of the cameras and a measurement of the distance between the capturing unit and the main object of the scene,
> - a rendering device for rendering the scene in 3D using the configuration data and the video flows.

13. The system according to claim 12, the system further comprising at least one calibration device located at or on the main object, and wherein the 3D data generating device is arranged to perform the measurement of the distance between the capturing unit and the main object of the scene with the calibration device.

14. A computer program providing computer executable instructions stored on a computer readable medium, which when loaded on to a data processor causes the data processor to perform a method for rendering in 3D a scene captured by a capturing unit according to claims 1 to 6.

15. A computer program providing computer executable instructions stored on a computer readable medium, which when loaded on to a data processor causes the data processor to perform a method for generating 3D data for subsequent rendering in 3D a scene according to claims 7 to 9.

EP 2 141 932 A1

```
    110 ──┐   ┌─────────────┐        ┌─────────────┐        ┌─────────────┐
          │   │ Calibration │        │             │        │ Prediction, │
          └── │             │        │             │        │ Smoothing and│
              │   Points    │        │             │        │Interpolation│
              └─────────────┘        │             │        │             │
                                     │             │        │    Unit     │
                                     │             │        └─────────────┘
    115 ──┐   ┌─────────────┐        │             │                    └── 125
          │   │  Distance   │        │   Network   │        ┌─────────────┐
          └── │             │        │             │        │  Capturing  │
              │    Unit     │        │             │        │             │
              └─────────────┘        │             │        │    Unit     │
                           135 ──┐   │             │        └─────────────┘
    120 ──┐   ┌─────────────┐     └─ │             │                    └── 130
          │   │  Parallax   │        │             │        ┌─────────────┐
          └── │             │        │             │        │  Rendering  │
              │ Calculation │        │             │        │             │
              │             │        │             │        │    Unit     │
              │    Unit     │        │             │        └─────────────┘
              └─────────────┘        └─────────────┘                    └── 140
```

**Figure 1**

EP 2 141 932 A1

Figure 2

Figure 3

Figure 4

**Figure 5**

EP 2 141 932 A1

Figure 6

EP 2 141 932 A1

700

710

720

**Figure 7**

810 — Setting calibration point(s)

**Figure 8**

815 — Receiving video flows generated by the cameras of the capturing unit from the captured scene

820 — Receiving configuration data comprising positioning data and a measurement of the distance between the capturing unit and the main object to capture

825 — Deriving the zero parallax plane distance

830 — Rendering in 3D the captured scene

832 — Calculating the shifting of the images of the video flows using the distance derived from data comprising the zero parallax plane distance

833 — Rendering the captured scene using the shifted images

EP 2 141 932 A1

Figure 9b

Figure 9a

Europäisches
Patentamt
European
Patent Office
Office européen
des brevets

# EUROPEAN SEARCH REPORT

**Application Number**

EP 08 30 5366

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/088554 A (SENSIS CORP [US]; VIGGIANO MARC J [US]; DONOVAN TODD A [US]; GERRY MIC) 24 August 2006 (2006-08-24) <br> * page 5, lines 7-29 * <br> * page 12, lines 6-16 * <br> * page 14, lines 9-21 * <br> * page 15, lines 20-26 * <br> * page 16, lines 3-9 * <br> * page 17, lines 8-22 * <br> * page 13, line 17 * <br> ----- | 1-15 | INV. <br> H04N13/00 |
| X | US 4 573 191 A (KIDODE MASATSUGU [JP] ET AL) 25 February 1986 (1986-02-25) <br> * column 2, line 28 - column 3, line 10 * <br> * column 3, line 59 - column 4, line 16 * <br> ----- | 1-15 | |
| X | US 2006/072020 A1 (MCCUTCHEN DAVID J [US]) 6 April 2006 (2006-04-06) <br> * paragraph [0020] * <br> * paragraph [0047] * <br> * paragraph [0051] * <br> ----- | 1-15 | |
| A | US 2007/279494 A1 (AMAN JAMES A [US] ET AL) 6 December 2007 (2007-12-06) <br> * paragraphs [0054] - [0066] * <br> * paragraph [0382] * <br> ----- | 1-4,7, 10-15 | TECHNICAL FIELDS SEARCHED (IPC) <br><br> H04N <br> G01S <br> G01C |

The present search report has been drawn up for all claims

| Place of search | Date of completion of the search | Examiner |
|---|---|---|
| The Hague | 7 November 2008 | Borcea, Veronica |

EPO FORM 1503 03.82 (P04C01)

## ANNEX TO THE EUROPEAN SEARCH REPORT
## ON EUROPEAN PATENT APPLICATION NO.

EP 08 30 5366

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2008

| Patent document cited in search report | | Publication date | Patent family member(s) | | Publication date |
|---|---|---|---|---|---|
| WO 2006088554 | A | 24-08-2006 | AU 2005327484 A1<br>CA 2594337 A1<br>EP 1836695 A1 | | 24-08-2006<br>24-08-2006<br>26-09-2007 |
| US 4573191 | A | 25-02-1986 | DE 3483399 D1<br>EP 0121411 A2<br>JP 59182688 A | | 22-11-1990<br>10-10-1984<br>17-10-1984 |
| US 2006072020 | A1 | 06-04-2006 | NONE | | |
| US 2007279494 | A1 | 06-12-2007 | NONE | | |

For more details about this annex : see Official Journal of the European Patent Office, No. 12/82